# EUROPÄISCHE PATENTSCHRIFT

(11) **EP 1 409 285 B1**
(45) Veröffentlichungstag und Bekanntmachung des Hinweises auf die Patenterteilung: **06.04.2011**
(21) Anmeldenummer: 02754246.3
(22) Anmeldetag: 20.06.2002
(51) Int. Cl.: B60M 1/20

(54) **OBERLEITUNGSKETTENWERK**
OVERHEAD CONTACT LINE CATENARY
MECANISME DE CHAINE POUR LIGNES DE TROLLEY

(30) Priorität: 25.07.2001 DE 10136237
(43) Veröffentlichungstag der Anmeldung: 21.04.2004
(73) Patentinhaber: SIEMENS AKTIENGESELLSCHAFT, 80333 München (DE)
(72) Erfinder: BECHMANN, Jürgen, 96172 Mühlhausen (DE); HAHN, Gunter, 91353 Hausen (DE)
(86) Internationale Anmeldenummer: PCT/DE2002/002276
(87) Internationale Veröffentlichungsnummer: WO 2003/011631

(56) Entgegenhaltungen:
- DE-C- 252 795
- DE-C- 599 152
- GB-A- 612 449

## Beschreibung

Die Erfindung betrifft ein Oberleitungskettenwerk mit einem Tragseil und einem Fahrdraht, die über Hänger miteinander verbunden sind wobei der Fahrdraht zick-zack geführt ist.

Es können auch mehrere Fahrdrähte mit einem oder mehreren Tragseilen kombiniert sein.

Ein übliches Oberleitungskettenwerk wird durch Stützen gehalten. Dazu weist jede Stütze Ausleger auf, an denen das Kettenwerk befestigt ist.

Früher war der Abstand zwischen den Stützen nicht größer als 80 m, was einen relativ großen Materialaufwand erforderte.

Der Erfindung liegt die Aufgabe zugrunde, ein Oberleitungskettenwerk anzugeben, mit dem deutlich größere Abstände zwischen den Stützen möglich sind. Es werden Abstände von 120 m und mehr angestrebt.

Um solche großen Abstände zu ermöglichen, ist es notwendig, die Windabweichung des Fahrdrahtes in einem definierten Bereich beidseits der Gleismitte zu halten. Die Windabweichung ist die bei starkem Wind sich ergebende seitliche Auslenkung des Fahrdrahtes. Eine zu große Windabweichung könnte nämlich dazu führen, dass der Fahrdraht den Pantographen (Stromabnehmer) einer Lokomotive seitlich verlässt und somit den Kontakt zum Pantographen verliert.

Die Zugkraft im Fahrdraht zu erhöhen, um eine geringere Windabweichung zu erhalten, ist zumindest dann nicht möglich, oder sehr aufwendig, wenn der Fahrdraht über ein kurzes Teilstück hochgezogen werden muss. Dies ist auf Bahnstrecken mit kleinen Gleisradien und vielen Weichen, insbesondere Weichen mit kleinem Radius, sowie bei hohen Windgeschwindigkeiten gegeben. Die erforderliche Hochführung des Fahrdrahtes mit großer Steigung über ein kurzes Teilstück ist bei deutlich erhöhter Zugkraft am Fahrdraht dann nämlich nicht möglich oder sehr aufwendig.

Die Aufgabe wird daher dadurch gelöst, dass das Tragseil mit einer größeren Zugkraft gespannt ist als der Fahrdraht.

Damit wird der Vorteil erzielt, dass das Tragseil durch die relativ große Zugkraft selbst nur eine geringe Windabweichung zulässt und somit über die Hänger die Windabweichung des Fahrdrahtes begrenzt, obwohl dieser nur mit der üblichen Zugkraft gespannt ist. Es sind also größere Abstände als bisher zwischen den Stützen des Oberleitungskettenwerks möglich. Es wird darüber hinaus der Vorteil erzielt, dass der Fahrdraht, da er gegenüber dem Tragseil mit relativ kleiner Zugkraft gespannt ist, für relativ kurze Strecken, z.B. an Weichen, in hochgezogener Position zu führen ist. Die Stabilität des Oberleitungskettenwerkes wird dabei, selbst für große Abstände zwischen den Stützen, durch die große Zugkraft am Tragseil gewährleistet.

Vorteilhafterweise werden die normativen Grenzwerte für die dynamische Befahrung der Strecke gemäß dem gegenwärtigen Stand der Technik (pr EN50318:2000) eingehalten.

Beispielsweise ist der Fahrdraht zick-zack geführt und das Tragseil ist ebenfalls zick-zack und gegenläufig oder zick-zack und seitlich versetzt zum Fahrdraht geführt.

Bei einer solchen Anordnung verlaufen die meisten Hänger nicht senkrecht, so dass sich horizontale Kraftkomponenten auf den Fahrdraht ergeben, die Windkräften entgegenwirken und die Windabweichung reduzieren. Es sind daher noch größere Abstände zwischen den Stützen des Oberleitungskettenwerkes möglich, ohne dass eine für den Zugverkehr zu große Windabweichung des Fahrdrahtes auftritt.

Die Zick-zack-Führung des Fahrdrahtes ermöglicht, dass die Schleifleiste eines Pantographen relativ gleichmäßig beschliffen wird.

Die Querschnittsfläche des Fahrdrahtes beträgt beispielsweise 65 mm² bis 100 mm², insbesondere 65 mm² bis 80 mm².

Damit wird der Vorteil erzielt, dass die Angriffsfläche, die der gegenüber dem Tragseil mit relativ kleiner Zugkraft gespannte Fahrdraht dem Wind bietet, relativ klein ist, so dass die Windabweichung des Fahrdrahtes relativ zum Tragseil klein bleibt.

Beispielsweise ist die Querschnittsfläche des Tragseils größer als die Querschnittsfläche des Fahrdrahtes.

Sofern der stromtragende Querschnitt des Fahrdrahtes zu gering für die Stromleitung ist, übernimmt dann das dickere Tragseil den wesentlichen Teil der Stromübertragung.

Das Tragseil hat beispielsweise eine Stahlseele, die mit einer Aluminiumlegierung ummantelt ist. Ein solches Tragseil hält vorteilhafterweise bei relativ kleiner Dichte des Materials eine erforderliche hohe Zugkraft aus und gewährleistet eine hohe Stromtragfähigkeit. Durch die geringe Dichte des Materials hat das Oberleitungskettenwerk bei vergleichbarer Stromtragfähigkeit ein geringeres Gewicht als bisher üblich. Auch aus diesem Grund sind größere Abstände zwischen den Stützen möglich.

Der Fahrdraht besteht beispielsweise aus einer Kupfer-Magnesium-Legierung. Dieser Auswahl liegt die neue Erkenntnis zugrunde, dass ein Fahrdraht aus diesem Material, selbst bei sehr geringer Querschnittsfläche, einer ausreichend großen Zugkraft standhält. Selbst die erforderliche Sicherheitsreserve ist gewährleistet.

Mit der Erfindung wird insbesondere der Vorteil erzielt, dass man für ein Oberleitungskettenwerk mit weniger Stützen und entsprechenden Tragkonstruktionen als bisher auskommt, was die Elektrifizierung einer Bahnstrecke deutlich verbilligt. Trotzdem ist es möglich, den Fahrdraht über eine relativ kurze Strecke, z.B. im Bereich einer Weiche, in einer hochgezogenen Position zu führen.

## Patentansprüche

1. Oberleitungskettenwerk mit einem Tragseil und einem Fahrdraht, die über Hänger miteinander verbunden sind,
**dadurch gekennzeichnet, dass** das Tragseil mit einer größeren Zugkraft gespannt ist als der Fahrdraht.

2. Oberleitungskettenwerk nach Anspruch 1,
**dadurch gekennzeichnet, dass** der Fahrdraht zick-zack geführt ist und dass das Tragseil ebenfalls zick-zack und gegenläufig oder zick-zack und seitlich versetzt zum Fahrdraht geführt ist.

3. Oberleitungskettenwerk nach einem der Ansprüche 1 oder 2,
**dadurch gekennzeichnet, dass** die Querschnittsfläche des Fahrdrahtes 65 mm² bis 100 mm² beträgt.

4. Oberleitungskettenwerk nach Anspruch 3,
**dadurch gekennzeichnet, dass** die Querschnittsfläche des Fahrdrahtes 65 mm² bis 80 mm² beträgt.

5. Oberleitungskettenwerk nach einem der Ansprüche 1 bis 4,
**dadurch gekennzeichnet, dass** die Querschnittsfläche des Tragseils größer als die Querschnittsfläche des Fahrdrahtes ist.

6. Oberleitungskettenwerk nach einem der Ansprüche 1 bis 5,
**dadurch gekennzeichnet, dass** das Tragseil eine Stahlseele hat, die mit einer Aluminiumlegierung ummantelt ist.

7. Oberleitungskettenwerk nach einem der Ansprüche 1 bis 6,
**dadurch gekennzeichnet, dass** der Fahrdraht aus einer Kupfer-Magnesium-Legierung besteht.

## Claims

1. Overhead contact line catenary, having a supporting cable and a contact wire which are connected to one another via suspension elements,
**characterized in that** the supporting cable is tensioned with a higher tensioning force than the contact wire.

2. Overhead contact line catenary according to Claim 1,
**characterized in that** the contact wire is guided in a zigzag fashion, and **in that** the supporting cable is also guided in a zigzag fashion, and is offset with respect to the contact wire in an opposing or zigzag fashion and laterally.

3. Overhead contact line catenary according to either of Claims 1 and 2,
**characterized in that** the cross-sectional area of the contact wire is 65 mm² to 100 mm².

4. Overhead contact line catenary according to Claim 3,
**characterized in that** the cross-sectional area of the contact wire is 65 mm² to 80 mm².

5. Overhead contact line catenary according to one of Claims 1 to 4,
**characterized in that** the cross-sectional area of the supporting cable is greater than the cross-sectional area of the contact wire.

6. Overhead contact line catenary according to one of Claims 1 to 5,
**characterized in that** the supporting cable has a steel core which is encased with an aluminium alloy.

7. Overhead contact line catenary according to one of Claims 1 to 6,
**characterized in that** the contact wire is composed of a copper/magnesium alloy.

## Revendications

1. Mécanisme de chaîne pour une ligne de contact, comportant un câble porteur et un fil de contact, qui sont reliés entre eux en des cavaliers,
**caractérisé en ce que** le câble porteur est tendu avec une force de traction plus grande que le fil de contact.

2. Mécanisme de chaîne pour une ligne de contact suivant la revendication 1,
**caractérisé en ce que** le fil de contact est guidé en zigzag et **en ce que** le câble porteur est guidé également en zigzag et en sens contraire ou en zigzag et en étant décalé latéralement par rapport au fil de contact.

3. Mécanisme de chaîne pour une ligne de contact suivant la revendication 1 ou 2,
**caractérisé en ce que** la surface de section transversale du fil de contact va de 65 mm² à 100 mm².

4. Mécanisme de chaîne pour une ligne de contact suivant la revendication 3,
**caractérisé en ce que** la surface de section transversale du fil de contact va de 65 mm² à 80 mm².

5. Mécanisme de chaîne pour une ligne de contact suivant l'une des revendications 1 à 4,
**caractérisé en ce que** la surface de section transversale du câble porteur est plus grande que la surface de la section transversale du fil de contact.

6. Mécanisme de chaîne pour une ligne de contact suivant l'une des revendications 1 à 5,
**caractérisé en ce que** le câble porteur a une âme en acier, qui est gainée d'un alliage d'aluminium.

7. Mécanisme de chaîne pour une ligne de contact suivant l'une des revendications 1 à 6,
**caractérisé en ce que** le fil de contact est en un alliage de cuivre et de magnésium.
